(19)

Europäisches Patentamt

European Patent Office

Office européen des brevets

(11) **EP 4 776 460 A1**

(12) **EUROPEAN PATENT APPLICATION**
published in accordance with Art. 153(4) EPC

(43) Date of publication:
**15.07.2026 Bulletin 2026/29**

(21) Application number: 25864534.0

(22) Date of filing: **08.08.2025**

(51) International Patent Classification (IPC):
*H02J 3/44* *(2026.01)*

(86) International application number:
**PCT/CN2025/113408**

(87) International publication number:
**WO 2026/113499 (04.06.2026 Gazette 2026/23)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **28.11.2024  CN 202411726513**

(71) Applicant: **SHANGHAI INVESTIGATION, DESIGN & RESEARCH INSTITUTE CO., LTD.**
**Shanghai 200434 (CN)**

(72) Inventors:
• **LIU, Jinlian**
  **Shanghai 200434 (CN)**
• **SHI, Ming**
  **Shanghai 200434 (CN)**
• **LI, Qingxin**
  **Shanghai 200434 (CN)**
• **ZOU, Jiayong**
  **Shanghai 200434 (CN)**
• **TONG, Fan**
  **Shanghai 200434 (CN)**
• **WANG, Deyou**
  **Shanghai 200434 (CN)**
• **JIANG, Kuan**
  **Shanghai 200434 (CN)**
• **WU, Haotian**
  **Shanghai 200434 (CN)**
• **WEI, Wuqing**
  **Shanghai 200434 (CN)**

(74) Representative: **Groth & Co. KB**
**P.O. Box 6107**
**102 32 Stockholm (SE)**

(54) **VOLTAGE STIFFNESS INDEX-BASED DISTRIBUTED SYNCHRONOUS CONDENSER CONFIGURATION METHOD AND APPARATUS, AND COMPUTER DEVICE, READABLE STORAGE MEDIUM AND PROGRAM PRODUCT**

(57)    The present application relates to the technical field of power supplies, and discloses a method and an apparatus for configuring distributed compensators based on voltage stiffness indexes, and a computer device, a computer-readable storage medium and a computer program product. The method is applied to a new energy power station comprising multiple input branches, and comprises: determining a value of a target voltage stiffness for each of the multiple input branches, wherein the voltage stiffness is used to represent a voltage support degree; determining a target capacity and a target number of distributed compensators arranged in each of the multiple input branches based on the value of target voltage stiffness, and acquiring a station capacity and a station number according to the sum of target capacities and target numbers of the multiple input branches; and configuring the distributed compensators for the new energy power station based on the station capacity and the station number, so as to configure the distributed compensators according to a target voltage support degree. The present application solves the problem that it is difficult to accurately evaluate actual support effectiveness of distributed compensators and acquire a configuration number and a configuration capacity of distributed compensators that match with actual requirements because the configuration techniques and indexes for distributed compensators in the prior art lack phase angle information of the relevant equipment.

Determining a value of a target voltage stiffness for each of the multiple input branches, wherein the voltage stiffness is used to represent a voltage support degree

S101

Determining a target capacity and a target number of distributed compensators arranged in each of the multiple input branches based on the value of target voltage stiffness, and acquiring a station capacity and a station number according to the sum of target capacities and target numbers of the multiple input branches

S102

Configuring the distributed compensators for the new energy power station based on the station capacity and the station number, so as to configure the distributed compensators according to a target voltage support degree

S103

FIG. 2

**Description**

**CROSS-REFERENCE TO RELATED APPLICATIONS**

The present application claims priority to Chinese Patent Application No. 202411726513.0, filed to the China National Intellectual Property Administration (CNIPA) on November 28, 2024 and entitled "METHOD AND APPARATUS FOR CONFIGURING DISTRIBUTED COMPENSATORS BASED ON VOLTAGE STIFFNESS INDEXES", the entire content of which is incorporated herein by reference.

**TECHNICAL FIELD**

The present application relates to the technical field of power supplies, and in particular relates to a method and an apparatus for configuring distributed compensators based on voltage stiffness indexes, and a computer device, a computer-readable storage medium and a computer program product.

**BACKGROUND**

In order to enhance a voltage support capability of a DC converter station of a transmission end and suppress a transient over-voltage in a DC system of a transmission end in a transient fault condition, currently adopted measure is that a centralized compensator with a large capacity is configured at an AC bus near a 500kV or 750kV DC converter station of the feeding transmission end.

However, while the centralized compensator can effectively suppress over-voltages at a connected field station or converter station, it is unable to significantly suppress an over-voltage at a new energy station with medium-voltage or low-voltage located at a greater electrical distance. Distributed compensators can be used as an effective technical solution for suppressing an over-voltage at a new energy station with medium-voltage or low-voltage. However, current techniques and indexes for evaluating the voltage support effectiveness of distributed compensators lack phase angle information of the relevant equipment, resulting in a deviation between evaluation results and actual effectiveness, so that it is difficult to acquire a configuration number and a configuration capacity of distributed compensators that match with actual requirements.

**SUMMARY OF THE INVENTION**

In view of this, the present application provides a method and an apparatus for configuring distributed compensators based on voltage stiffness indexes, and a computer device, a computer-readable storage medium and a computer program product, which solves the problem that it is difficult to accurately evaluate actual support effectiveness of distributed compensators and acquire a configuration number and a configuration capacity of distributed compensators that match with actual requirements because the configuration techniques and indexes for distributed compensators in the prior art lack phase angle information of the relevant equipment.

In a first aspect, the present application provides a method for configuring distributed compensators based on voltage stiffness indexes, wherein the method for configuring distributed compensators based on voltage stiffness indexes is applied to a new energy power station comprising multiple input branches, and the method comprises:

determining a value of a target voltage stiffness for each of the multiple input branches, wherein the voltage stiffness is used to represent a voltage support degree;

determining a target capacity and a target number of distributed compensators arranged in each of the multiple input branches based on the value of target voltage stiffness, and acquiring a station capacity and a station number according to the sum of target capacities and target numbers of the multiple input branches; and

configuring the distributed compensators for the new energy power station based on the station capacity and the station number, so as to configure the distributed compensators according to a target voltage support degree.

The method for configuring distributed compensators based on voltage stiffness indexes provided in the present embodiment uses the value of target voltage stiffness for each of the multiple input branches of the new energy power station as an index to obtain the target capacity and the target number of distributed compensators that need to be arranged in each of the multiple input branches, and acquires a station capacity and a station number according to the sum of target capacities and target numbers of the multiple input branches, and configures the distributed compensators for the new energy power station based on the station capacity and the station number, so as to enable the support voltage of the new energy power station to meet an over-voltage condition, thereby achieving a significant over-voltage suppression effect.

In an optional embodiment, the step of determining the target capacity and the target number of distributed compensators arranged in each of the multiple input branches based on the value of target voltage stiffness comprises:

determining an initial capacity and an initial number of distributed compensators arranged in each of the multiple input branches; and

using the initial capacity and the initial number as a current capacity and a current number, calculating a value of a current voltage stiffness corresponding to the current capacity and the current number, iteratively updating the current capacity and the current number based on the value of the current voltage stiffness and the value of the target voltage stiffness until the value of the current voltage stiffness of each of the multiple input branches meets a corresponding value of the target voltage stiffness, and obtaining a target capacity and a target number of each of the multiple input branches, wherein a difference between the value of the target voltage stiffness and a value of updated voltage stiffness corresponding to the target capacity and the target number is less than a predetermined difference threshold.

In an optional embodiment, the step of iteratively updating the current capacity and the current number based on the value of the current voltage stiffness and the value of the target voltage stiffness comprises:

calculating a total capacity of all the multiple input branches of the new energy power station, and calculating a value of the current voltage stiffness corresponding to the current capacity and the current number;

obtaining a capacity adjustment value based on the value of the target voltage stiffness, the total capacity, the current capacity, the current number, and the value of the current voltage stiffness; and

updating the current capacity and the current number based on the capacity adjustment value.

In an optional embodiment, the multiple input branches include an input branch to be measured and remaining input branches, and the step of calculating the value of the current voltage stiffness corresponding to the current capacity and the current number comprises:

calculating self-impedance vectors of the remaining input branches, a grid-connected equipment impedance vector of the input branch to be measured, grid-connected equipment impedance vectors of the remaining input branches and a power grid impedance vector that correspond to the current capacity and the current number by using the Thevenin equivalent circuit conversion formula; and

calculating the value of the current voltage stiffness based on the self-impedance vectors of the remaining input branches, the grid-connected equipment impedance vector of the input branch to be measured, the grid-connected equipment impedance vectors of the remaining input branches and the power grid impedance vector.

In an optional embodiment, the step of calculating the value of the current voltage stiffness corresponding to the current capacity and the current number comprises:

obtaining a transient voltage and a no-load voltage of the AC bus with multiple DC feed lines that correspond to the current capacity and the current number based on an electromagnetic transient simulation model of the new energy power station; and

obtaining the value of the current voltage stiffness based on a ratio of the transient voltage of the AC bus with multiple DC feed lines to the no-load voltage of the AC bus with multiple DC feed lines.

In an optional embodiment, the method further comprises:

if the value of the current voltage stiffness is lower than that of the target voltage stiffness, increasing the current capacity and/or the current number; and

if the value of the current voltage stiffness is higher than that of the target voltage stiffness, decreasing the current capacity and/or the current number.

In an optional embodiment, the step of determining the value of the target voltage stiffness for each of the multiple input branches comprises:

determining the value of the target voltage stiffness based on actual voltage support requirement of each of the multiple input branches; and/or,

determining the value of the target voltage stiffness based on a voltage tolerance of each of the multiple input branches.

In a second aspect, the present application provides an apparatus for configuring distributed compensators based on voltage stiffness indexes, wherein the apparatus comprises:

a first determining module, configured to determine a value of a target voltage stiffness for each of multiple input branches, wherein the voltage stiffness is used to represent a voltage support degree;
a second determining module, configured to determine a target capacity and a target number of distributed compensators arranged in each of the multiple input branches based on the value of target voltage stiffness, and acquire a station capacity and a station number according to the sum of target capacities and target numbers of the multiple input branches;
a configuration module, configured to configure the distributed compensators for the new energy power station based on the station capacity and the station number, so as to configure the distributed compensators according to a target voltage support degree.

In a third aspect, the present application provides a computer device, comprising: a memory and a processor, wherein the memory and the processor are interconnected in a communication manner, the memory has computer instructions stored therein, and the processor is configured to execute the computer instructions to perform the method for configuring distributed compensators based on voltage stiffness indexes in the first aspect or any embodiment corresponding thereto.

In a fourth aspect, the present application provides a computer-readable storage medium, wherein the computer-readable storage medium has computer instructions stored therein, wherein the computer instructions are configured to enable a computer to perform the method for configuring distributed compensators based on voltage stiffness indexes in the first aspect or any embodiment corresponding thereto.

In a fifth aspect, the present application provides a computer program product, comprising computer instructions, wherein the computer instructions are configured to enable a computer to perform the method for configuring distributed compensators based on voltage stiffness indexes in the first aspect or any embodiment corresponding thereto.

## BRIEF DESCRIPTION OF THE DRAWINGS

To more clearly illustrate technical solutions in specific embodiments of the present application or in the prior art, a brief introduction to the figures that are needed for describing the specific embodiments or the prior art will be provided below. Apparently, the figures described below only represent some embodiments of the present application. For those with ordinary skill in the art, other figures can be obtained based on these figures without making creative labor.

FIG. 1 is a structural diagram of a centralized compensator;
FIG. 2 is a flow chart of a method for configuring distributed compensators based on voltage stiffness indexes according to an embodiment of the present application;
FIG. 3 is an application schematic diagram of a method for configuring distributed compensators based on voltage stiffness indexes according to an embodiment of the present application;
FIG. 4 is another application schematic diagram of a method for configuring distributed compensators based on voltage stiffness indexes according to an embodiment of the present application;
FIG. 5 is another flow chart of a method for configuring distributed compensators based on voltage stiffness indexes according to an embodiment of the present application;
FIG. 6 is a structural block diagram of an apparatus for configuring distributed compensators based on voltage stiffness indexes according to an embodiment of the present application;
FIG. 7 is a hardware structural schematic diagram of a computer device according to an embodiment of the present application.

## DETAILED DESCRIPTION

To make purposes, technical solutions, and advantages of embodiments of the present application clearer, technical solutions of the embodiments of the present application will be described clearly and completely below with reference to the drawings of the embodiments of the present application. Apparently, the described embodiments only represent a part of the embodiments of the present application and not all the embodiments of the present application. All other embodiments obtainable by those skilled in the art based on the described embodiments of the present application without making any creative labor fall within the protection scope of the present application.

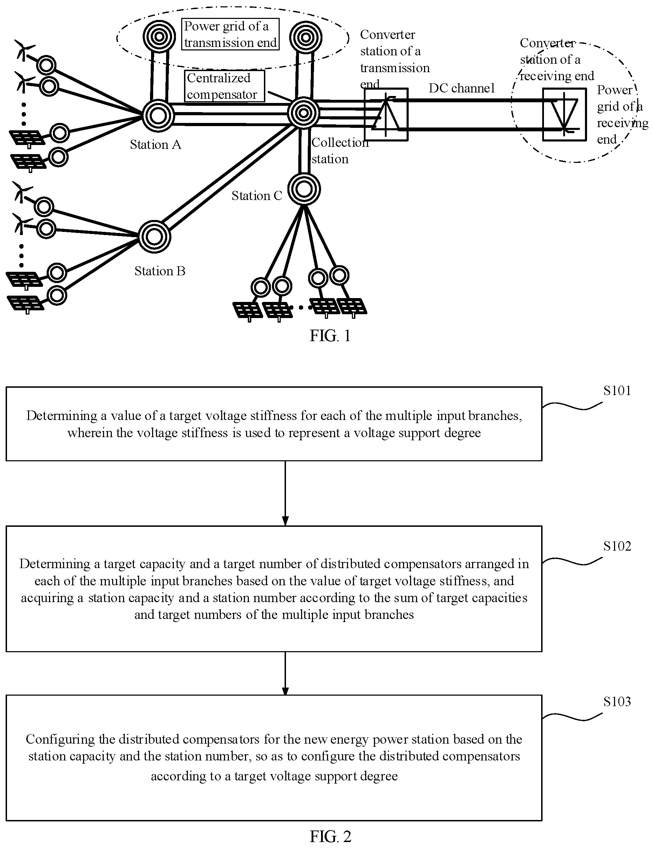

In the related art, in order to enhance a voltage support capability of a DC converter station of a transmission end and suppress a transient over-voltage in a DC system of a transmission end in a transient fault condition, currently adopted measure is that a centralized compensator with a large capacity is configured at an AC bus of a collection station near a 500kV or 750kV DC converter station of the feeding transmission end. As shown in FIG. 1, in the prior art, only a centralized compensator is disposed at a collection station for all the power stations. However, while the centralized compensator can effectively suppress over-voltages at a connected field station or converter station, it is unable to significantly suppress an over-voltage at a new energy station with medium-voltage or low-voltage located at a greater electrical distance. Distributed compensators can be used as an effective technical solution for suppressing an over-voltage at a new energy station with medium-voltage or low-voltage. However, current techniques and indexes for evaluating the voltage support effectiveness of distributed compensators lack phase angle information of the relevant equipment, resulting in a deviation between evaluation results and actual effectiveness, so that it is difficult to acquire a configuration number and a configuration capacity of distributed compensators that match with actual requirements.

According to the embodiments of the present application, embodiments of a method for configuring distributed compensators based on voltage stiffness indexes are provided. It should be noted that the steps shown in the flow chart of the figures may be executed in a computer system, such as a computer system having a set of computer-executable instructions, and although the steps are shown in a logical sequence in the flow chart, in some cases, the steps shown or described herein may be executed in a different order.

In the present embodiment, a method for configuring distributed compensators based on voltage stiffness indexes is provided, which can be applied to mobile terminals, such as smartphones, tablets, etc. FIG. 2 is a flow chart of the method for configuring distributed compensators based on voltage stiffness indexes according to the embodiments of the present application. As shown in FIG. 2, the method for configuring distributed compensators based on voltage stiffness indexes is applied to a new energy power station comprising multiple input branches, and a process of the method comprises the following steps:

Step S101: determining a value of a target voltage stiffness for each of the multiple input branches, wherein the voltage stiffness is used to represent a voltage support degree.

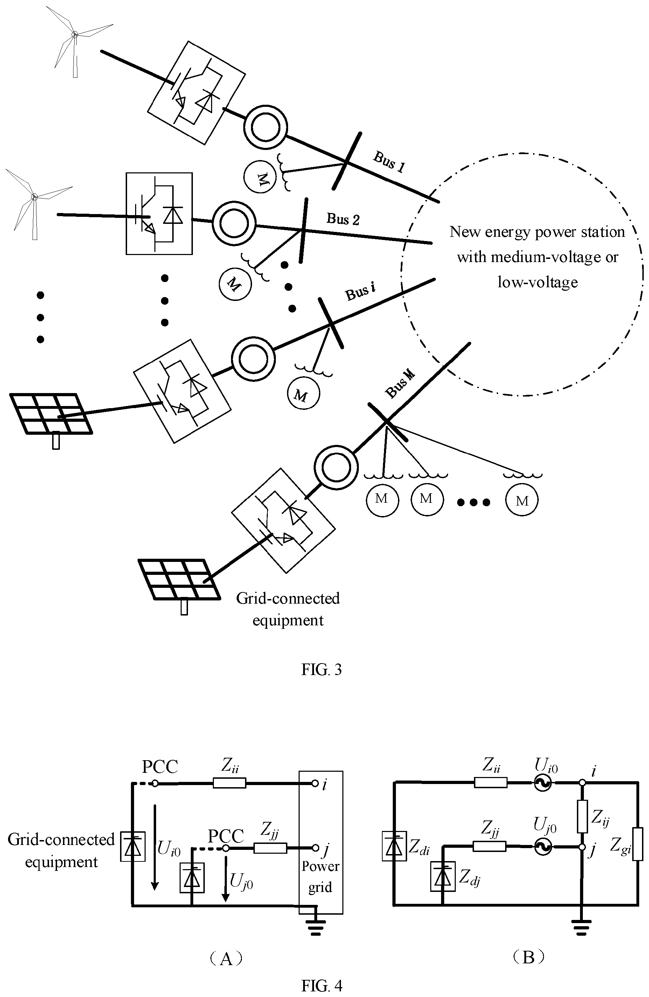

Referring to Figure 3, distributed compensators are compensators with a certain capacity that are configured in new energy power stations with medium-voltage or low-voltage in different regions, so as to achieve effective reactive power compensation and voltage support for the new energy power station. The new energy power station comprises multiple input branches, which can be power generation branches of wind power stations and/or photovoltaic power stations. Each of the multiple input branches may be provided with one or more distributed compensators, or none at all. Grid-connected equipment refers to grid-connected converters. The multiple input branches indicate that the new energy power station has multiple DC feed lines.

Specifically, the voltage stiffness is expressed as a ratio of a transient voltage to a no-load voltage of the AC bus at an output line of the new energy power station. Voltage parameters comprehensively comprise magnitude and phase information of the equivalent impedances of the grid-connected equipment and power grid equipment, so as to more accurately characterize the over-voltage suppression and voltage support strength effects under the working conditions of the new energy power station with multiple DC feed lines. The multiple input branches are referred to as the first input branch, the second input branch, ..., the $i$th input branch. The target voltage stiffness for each of the multiple input branches in the new energy power station is calculated, referred to as the first target voltage stiffness, the second target voltage stiffness, ..., the $i$th target voltage stiffness. Optionally, the target voltage stiffness is a value set by the user based on actual circumstances.

Step S102: determining a target capacity and a target number of distributed compensators arranged in each of the multiple input branches based on the value of target voltage stiffness, and acquiring a station capacity and a station number according to the sum of target capacities and target numbers of the multiple input branches.

Specifically, a target capacity and a target number of distributed compensators arranged in each of the multiple input branches are calculated based on all values of target voltage stiffness. The target capacity can be a unit capacity of one compensator, so the target number can vary depending on the unit capacity of the distributed compensators. A product of the target capacity and the target number is a total capacity to be configured for the input branch. Of course, only the total capacity of the distributed compensators arranged in each of the multiple input branches can be determined based on the value of the target voltage stiffness, and the target capacity and the target number can then be set based on the total capacity to be configured for each of the multiple input branches. At this point, the distributed compensators in the new energy power station have optimally configured capacities.

Optionally, the target capacity and the target number can be obtained based on a predefined computational model. The target capacity and the target number of each of the multiple input branches under the condition that a value of an actual voltage stiffness of each of the multiple input branches meets a corresponding threshold of the target voltage stiffness are calculated and obtained by using the computational model. The threshold of the target voltage stiffness can be a value within a predefined range of target voltage stiffness. Wherein, the capacity and number of distributed compensators are correlated with the value of the actual voltage stiffness.

Step S103: configuring the distributed compensators for the new energy power station based on the station capacity and the station number, so as to configure the distributed compensators according to a target voltage support degree.

Specifically, one or more distributed compensators can be arranged in each of the multiple input branches, so one or more distributed compensators can be arranged in the new energy power station. Depending on the total capacity of the new energy power station, different numbers and different unit capacities of distributed compensators can be arranged.

Of course, the method for configuring distributed compensators can also be applied to the centralized compensator at the collection station, while the multiple input branches connected thereto can be the respective new energy power stations.

The method for configuring distributed compensators based on voltage stiffness indexes provided in the present embodiment uses the value of target voltage stiffness for each of the multiple input branches of the new energy power station as an index to obtain the target capacity and the target number of distributed compensators that need to be arranged in each of the multiple input branches, and acquires a station capacity and a station number according to the sum of target capacities and target numbers of the multiple input branches, and configures the distributed compensators for the new energy power station based on the station capacity and the station number, so as to enable the support voltage of the new energy power station to meet an over-voltage condition, thereby achieving a significant over-voltage suppression effect.

In some optional embodiments, the step S102 comprises:

Step 1: determining an initial capacity and an initial number of distributed compensators arranged in each of the multiple input branches;

Specifically, the initial capacity and the initial number are roughly determined based on actual conditions in the new energy power station. Of course, each initial capacity and each initial number can be set to a uniform value.

Step 2: using the initial capacity and the initial number as a current capacity and a current number, calculating a value of a current voltage stiffness corresponding to the current capacity and the current number, iteratively updating the current capacity and the current number based on the value of the current voltage stiffness and the value of the target voltage stiffness until the value of the current voltage stiffness of each of the multiple input branches meets a corresponding value of the target voltage stiffness, and obtaining a target capacity and a target number of each of the multiple input branches, wherein a difference between the value of the target voltage stiffness and a value of updated voltage stiffness corresponding to the target capacity and the target number is less than a predetermined difference threshold.

Specifically, under the configuration of the distributed compensators with the initial capacity and the initial number, a value of the voltage stiffness of each of the multiple input branches is calculated, and each value of the voltage stiffness is adjusted according to a pre-set adjustment unit value. It is worth noting that when adjusting the current capacity and the current number of one input branch, the current capacities and current numbers of the remaining input branches may also change. Therefore, in each iteration update, the current capacity and the current number of each of the multiple input branches are adjusted respectively before proceeding to the next iteration update. Finally, the target capacity and target number are obtained for each of the multiple input branches, wherein a difference between the value of the target voltage stiffness and a value of updated voltage stiffness corresponding to the target capacity and the target number is less than a predetermined difference threshold. $K_{vi,h}^{m}$ represents the voltage stiffness of the $i$th input branch after the $h$th update, $K_{viref}^{m}$ represents the target voltage stiffness of the $i$th input branch, and $\varepsilon$ represents the predetermined difference threshold. That is, $K_{vi,h}^{m} - K_{viref}^{m} \leq \varepsilon$. Here, the difference between the value of the updated voltage stiffness and the value of the target voltage stiffness can be taken as an absolute value, and $m$ represents the number of the multiple input branches.

In some optional implementations, the step of "iteratively updating the current capacity and the current number based on the value of the current voltage stiffness and the value of the target voltage stiffness" in Step 2 comprises:

Step (1): calculating a total capacity of all the multiple input branches of the new energy power station;

Specifically, $Q_{Ci0}$ represents the initial unit capacity of a single distributed compensator of the $i$th input branch, where , $i$=1, 2, 3, ..., $M$, i.e., the number of the multiple input branches in the new energy power station is $M$. $N_{i0}$ represents the initial number, $Q_{Ci0} N_{i0}$ represents the initial total capacity of the $i$th input branch, $Q_{CT}$ represents the total capacity of the distributed compensators in the new energy power station, and $h$ represents the $h$th iteration of regulation. That is,

$$Q_{CT,h} = \sum_{i=1}^{M} N_{ih} Q_{Cih}.$$

Step (2): obtaining a capacity adjustment value based on the value of the target voltage stiffness, the total capacity, the current capacity, the current number, and the value of the current voltage stiffness;

Specifically, $\Delta Q_{Ci,(h+1)}$ represents the capacity adjustment value for the $h$+ 1 th iteration, $K_{viref}^{m}$ represents the target voltage stiffness of the $i$th input branch, $Q_{Ci,(h)}$ represents the unit capacity of the distributed compensators of the $i$th input branch after the $h$th iteration of adjustment, i.e., the current capacity, $N_{Ci,(h)}$ represents the number of distributed compensators in the *i*th input branch after the *h*th iteration of adjustment, i.e., the current number, $Q_{CT,(h)}$ represents the total capacity of distributed compensators of the new energy power station after the *h*th iteration of adjustment, $K_{vi0,(h)}^{m}$ represents the value of the current voltage stiffness of the *i*th input branch after the *h*th iteration of adjustment.

$$\Delta Q_{Ci,(h+1)} = \frac{K_{vi0,(h)}^{m} - K_{viref}^{m}}{K_{viref}^{m}} \bullet \frac{Q_{Ci,(h)} N_{Ci,(h)}}{Q_{CT,(h)}} \bullet N_{i0} Q_{i0}$$

The capacity adjustment value for the *h*+1th iteration is obtained based on the total capacity of distributed compensators of the new energy power station after the *h*th iteration of adjustment, the capacity of distributed compensators of the *i*th input branch after the *h*th iteration of adjustment, the value of the current voltage stiffness of the *i*th input branch after the *h*th iteration of adjustment, the initial total capacity of the *i*th input branch, and the value of the target voltage stiffness of the *i*th input branch.

That is, the capacity adjustment value for the *h*+1th iteration is proportional to a ratio of the target difference value of voltage stiffness and a ratio of the capacity of the distributed compensators of the *i*th input branch after the *h*th iteration of adjustment to the total capacity of the distributed compensators of the new energy power station after the *h*th iteration of adjustment.

Step (3): updating the current capacity and the current number based on the capacity adjustment value.

Specifically, after obtaining the capacity adjustment value for the *h*+1th iteration, the total capacity of the *h*th iteration is adjusted accordingly to obtain the total capacity of the *i* th input branch of the *h+1th* iteration.

$$Q_{Ci,(h+1)} N_{i,(h+1)} = Q_{Ci,h} N_{i,h} + \Delta Q_{Ci,h+1}$$

In some optional implementations, the multiple input branches include an input branch to be measured and remaining input branches. The step of "calculating the value of the current voltage stiffness corresponding to the current capacity and the current number" in Step 2 includes:

   Step (1): calculating self-impedance vectors of the remaining input branches, a grid-connected equipment impedance vector of the input branch to be measured, grid-connected equipment impedance vectors of the remaining input branches and a power grid impedance vector that correspond to the current capacity and the current number by using the Thevenin equivalent circuit conversion formula;
   Step (2): calculating the value of the current voltage stiffness based on the self-impedance vectors of the remaining input branches, the grid-connected equipment impedance vector of the input branch to be measured, the grid-connected equipment impedance vectors of the remaining input branches and the power grid impedance vector.

Specifically, by using the Thevenin equivalent circuit conversion formula, $\dot{Z}_{jj}$, $\dot{Z}_{di}$, $\dot{Z}_{dj}$, and $\overset{\bullet}{Z}_{gi}^{m}$ are derived respectively. The Thevenin equivalent circuit conversion formula is not detailed here. *i* represents the *i*th input branch, *j* represents the remaining input branches, i.e., when $j \geq 2$, *j* represents a cumulative value of multiple mutual impedances.

Referring to Figure 4, the circuit (A) is equivalent to the circuit (B). $K_{vi}^{m}$ represents the voltage stiffness of the multiple input branches, $U_{vi}^{m}$ represents the transient voltage of the AC bus of the *i*th input branch, $U_{i0}$ represents the no-load voltage of the AC bus of the *i*th input branch, $\dot{U}_{i0}$ and $\dot{U}_{j0}$ respectively represent the no-load voltage vector of the AC bus of the *i*th input branch and the no-load voltage vector of the AC bus of the *j*th input branch, $\overset{\bullet}{Z}_{gi}^{m}$ represents the equivalent impedance vector of the power grid connected with multiple input branches, $\dot{Z}_{ij}$ represents the mutual impedance vector between the *i*th input branch and the *j*th input branch, $\dot{Z}_{jj}$ represents the self-impedance vector of the *j*th input branch, and $\dot{Z}_{di}$ and $\dot{Z}_{dj}$ respectively represent the equivalent impedance vector of the grid-connected equipment of the *i*th input branch and the equivalent impedance vector of the grid-connected equipment of the *j*th input branch. Based on relevant research and operational experience, generally, $\dot{U}_{j0}/\dot{U}_{i0} \approx 1$.

$$K_{vi}^m = \frac{U_{vi}^m}{U_{i0}} = \left| \frac{\dot{E}_g^m}{U_{i0}} \frac{\dot{Z}_{di}}{\dot{Z}_{gi}^m + \dot{Z}_{di}} \right| = \left| \frac{\dot{U}_{i0}}{U_{i0}} + \frac{\dot{U}_{j0}}{\dot{U}_{i0}} \frac{\dot{Z}_{ij}}{\dot{Z}_{ij} + \dot{Z}_{jj} + \dot{Z}_{dj}} \right| \bullet \left| \frac{\dot{Z}_{di}}{\dot{Z}_{gi}^m + \dot{Z}_{di}} \right|$$

$$= \left| 1 + \frac{\dot{U}_{j0}}{\dot{U}_{i0}} \frac{\dot{Z}_{ij}}{\dot{Z}_{ij} + \dot{Z}_{jj} + \dot{Z}_{dj}} \right| \bullet \left| \frac{\dot{Z}_{di}}{\dot{Z}_{gi}^m + \dot{Z}_{di}} \right|$$

$$\approx \left| 1 + \frac{\dot{Z}_{ij}}{\dot{Z}_{ij} + \dot{Z}_{jj} + \dot{Z}_{dj}} \right| \bullet \left| \frac{\dot{Z}_{di}}{\dot{Z}_{gi}^m + \dot{Z}_{di}} \right|$$

In some optional implementations, the step of "calculating the value of the current voltage stiffness corresponding to the current capacity and the current number" in step 2 comprises:

Step (3): obtaining a transient voltage and a no-load voltage of the AC bus with multiple DC feed lines that correspond to the current capacity and the current number based on an electromagnetic transient simulation model of the new energy power station;
Step (4): obtaining the value of the current voltage stiffness based on the ratio of the transient voltage of the AC bus with multiple DC feed lines to the no-load voltage of the AC bus with multiple DC feed lines.

Specifically, based on an electromagnetic transient simulation model of the new energy power station, $U_{vi}^m$ and $U_{i0}$ are obtained. Wherein, $U_{vi}^m$ represents the transient voltage of the AC bus of $i$th input branch, and $U_{i0}$ represents the no-load voltage of the AC bus of the $i$th input branch. Optionally, the simulation software can specifically be PSCAD (Power Systems Computer Aided Design) or Simulink (a visualized simulation tool), etc. In the simulation software, a corresponding electromagnetic transient simulation model is constructed based on the structure of the new energy power station, and the no-load voltage values and overvoltage values under transient conditions of each AC bus of each new energy power station are simulated by the simulation. The voltage stiffness of the $i$th input branch is then calculated by using the formula for $K_{vi}^m$. That is, $K_{vi}^m = \dfrac{U_{vi}^m}{U_{i0}}$ .

In some optional embodiments, the method for configuring distributed compensators further comprises:

Step 1: if the value of the current voltage stiffness is lower than that of the target voltage stiffness, increasing the current capacity and/or the current number;
Step 2: if the value of the current voltage stiffness is higher than that of the target voltage stiffness, decreasing the current capacity and/or the current number.

Specifically, according to the formula for $K_{vi}^m$ , the primary sensitivity parameters influencing the value of the voltage stiffness of the input branch include self-impedance, mutual impedance, equipment equivalent impedance, and power grid equivalent impedance. The value of the voltage stiffness of the input branch is inversely proportional to the power grid equivalent impedance and directly proportional to the equivalent impedance of the grid-connected equipment. In order to evaluating the related change trend of the value of the voltage stiffness of multiple DC feed lines in relation to the self-impedance and mutual impedance, the partial derivatives of voltage stiffness with respect to the two parameters is firstly derived.

$$\frac{\partial K_{vi}^{m}}{\partial Z_{jj}} \approx \partial\left(\left|1+\frac{\dot{Z}_{ij}}{\dot{Z}_{ij}+\dot{Z}_{jj}+\dot{Z}_{dj}}\right| \bullet \left|\frac{\dot{Z}_{di}}{\dot{Z}_{gi}^{m}+\dot{Z}_{di}}\right|\right)/\partial Z_{jj}$$

$$\approx -\frac{\dot{Z}_{ij}}{(\dot{Z}_{ij}+\dot{Z}_{jj}+\dot{Z}_{dj})^{2}}\left|\frac{\dot{Z}_{di}}{\dot{Z}_{gi}^{m}+\dot{Z}_{di}}\right| \bullet \left|1+\frac{\dot{Z}_{ij}}{\dot{Z}_{ij}+\dot{Z}_{jj}+\dot{Z}_{dj}}\right|\langle 0$$

It can be seen that, since the partial derivative of the voltage stiffness of the input branch with respect to self-impedance is always less than zero, the voltage stiffness of the input branch exhibits a change trend of negative correlation with the self-impedance.

Based on the partial derivative of the voltage stiffness of the input branch with respect to the mutual impedance, it can be derived that:

$$\frac{\partial K_{vi}^{m}}{\partial Z_{ij}} \approx \partial\left(\left|1+\frac{\dot{Z}_{ij}}{\dot{Z}_{ij}+\dot{Z}_{jj}+\dot{Z}_{dj}}\right| \bullet \left|\frac{\dot{Z}_{di}}{\dot{Z}_{gi}^{m}+\dot{Z}_{di}}\right|\right)/\partial Z_{ij}$$

$$\approx -\frac{\dot{Z}_{jj}+\dot{Z}_{dj}}{(\dot{Z}_{ij}+\dot{Z}_{jj}+\dot{Z}_{dj})^{2}}\left|\frac{\dot{Z}_{di}}{\dot{Z}_{gi}^{m}+\dot{Z}_{di}}\right| \bullet \left|1+\frac{\dot{Z}_{ij}}{\dot{Z}_{ij}+\dot{Z}_{jj}+\dot{Z}_{dj}}\right|\langle 0$$

Therefore, the voltage stiffness of the input branch exhibits a change trend of negative correlation with the mutual impedance.

The derivatives of the reactive capacity $Q_{vi}$, absorbed by the AC collection bus of the new energy power station, with respect to the self-impedance and the mutual impedance can be derived as follows:

$$\frac{\partial Q_{vi}}{\partial Z_{ii}} \approx \frac{\partial(U_{vi}^{2}/Z_{ii})}{\partial Z_{ii}} = -\frac{U_{vi}^{2}}{Z_{ii}^{2}}\langle 0$$

$$\frac{\partial Q_{vi}}{\partial Z_{ij}} \approx \frac{\partial(U_{vi}^{2}/Z_{ij})}{\partial Z_{ij}} = -\frac{U_{vi}^{2}}{Z_{ij}^{2}}\langle 0$$

It can be seen that the reactive capacity also exhibits a change trend of negative correlation with both the self-impedance and the mutual impedance. Therefore, the voltage stiffness exhibits a change trend of positive correlation with the reactive capacity emitted or absorbed by the distributed compensators.

Therefore, if the value of the current voltage stiffness is lower than that of the target voltage stiffness, the current capacity and/or the current number are increased. If the value of the current voltage stiffness is higher than that of the target voltage stiffness, the current capacity and/or the current number are decreased.

In some optional implementations, the step of "determining a value of a target voltage stiffness for each of the multiple input branches" in step S101 includes:

Step option 1: determining the value of the target voltage stiffness based on actual voltage support requirement of each of the multiple input branches; and/or,

Specifically, the optimal capacity of the distributed compensators is configured based on the target value of the voltage stiffness that is set for each of the multiple input branches, and the maximum over-voltage level of the AC bus is typically set to be 1.3 p.u.

Step option 2: determining the value of the target voltage stiffness based on a voltage tolerance of each of the multiple input branches.

Specifically, the value of the target voltage stiffness can also be determined based on the actual voltage tolerance of each of the multiple input branches.

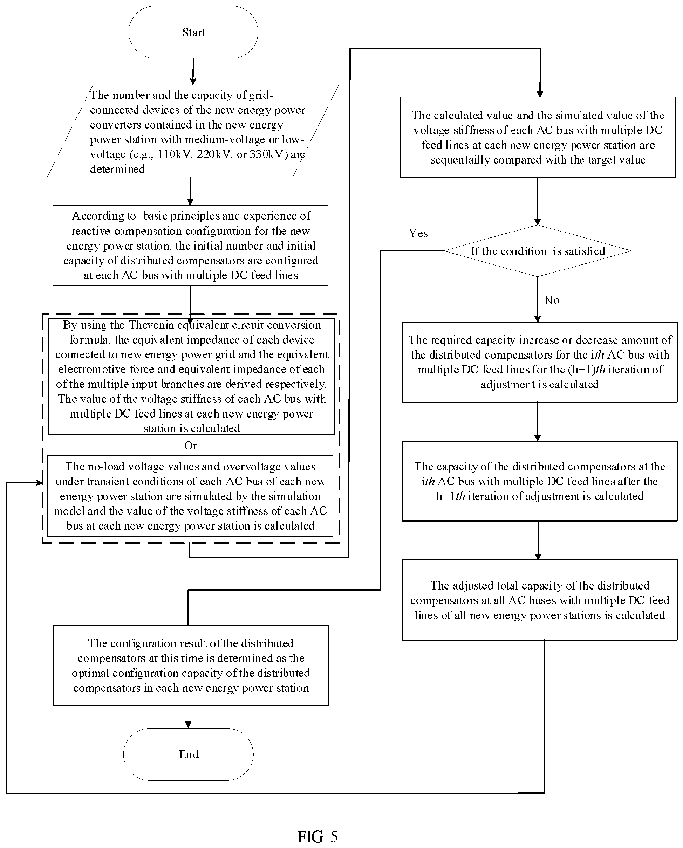

Referring to Figure 5, based on the actual engineering plan, the number and the capacity of grid-connected devices of the new energy power converters contained in the new energy power station with medium-voltage or low-voltage (e.g., 110kV, 220kV, or 330kV) are determined. According to basic principles and experience of reactive compensation configuration for the new energy power station, the initial number and initial capacity of distributed compensators are configured at each AC bus with multiple DC feed lines. By using the Thevenin equivalent circuit conversion formula, the equivalent impedance of each device connected to new energy power grid and the equivalent electromotive force and equivalent impedance of each of the multiple input branches are derived respectively. The value of the voltage stiffness of each AC bus with multiple DC feed lines at each new energy power station is calculated based on the formula for $K_{vi}^{m}$. Alternatively, the no-load voltage values and overvoltage values under transient conditions of each AC bus of each new energy power station are simulated by the simulation model and the value of the voltage stiffness of each AC bus at each new energy power station is calculated based on the formulas for $K_{vi}^{m}$. If the condition $K_{vi,h}^{m} - K_{viref}^{m} \leq \varepsilon$ is satisfied, the configuration result of the distributed compensators at this time is determined as the optimal configuration capacity of the distributed compensators in each new energy power station. If the condition $K_{vi,h}^{m} - K_{viref}^{m} \leq \varepsilon$ is not satisfied, the required capacity increase or decrease amount of the distributed compensators for the *ith* AC bus with multiple DC feed lines for the (h+1)*th* iteration of adjustment is calculated, then the capacity of the distributed compensators at the *ith* AC bus with multiple DC feed lines after the *h+1th* iteration of adjustment is calculated, and the adjusted total capacity of the distributed compensators at all AC buses with multiple DC feed lines of all new energy power stations is calculated. The step of calculating the value of the voltage stiffness of each AC bus with multiple DC feed lines at each new energy power station based on the formula for $K_{vi}^{m}$ is returned to, until the condition $K_{vi,h}^{m} - K_{viref}^{m} \leq \varepsilon$ is satisfied.

In the present embodiment, an apparatus for configuring distributed compensators based on voltage stiffness indexes is also provided, which is used to implement the above embodiments and optional implementations thereof. Details already described are omitted here. As used hereinafter, the term "module" refers to a combination of software and/or hardware that performs a predetermined function. Although the apparatus described in the following embodiments are preferably implemented in a software manner, implementation in a hardware manner, or a combination of software and hardware, is also possible and can be conceived.

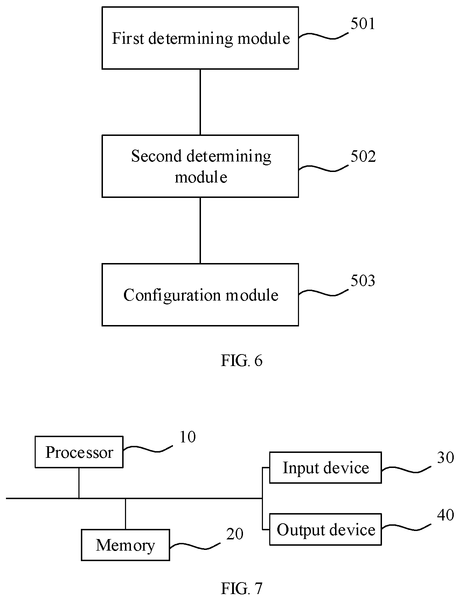

The present embodiment provides an apparatus for configuring distributed compensators based on voltage stiffness indexes, as shown in FIG. 6, the apparatus comprises:

A first determining module 501, configured to determine a value of a target voltage stiffness for each of multiple input branches, wherein the voltage stiffness is used to represent a voltage support degree.

A second determining module 502, configured to determine a target capacity and a target number of distributed compensators arranged in each of the multiple input branches based on the value of target voltage stiffness, and acquire a station capacity and a station number according to the sum of target capacities and target numbers of the multiple input branches.

A configuration module 503, configured to configure the distributed compensators for the new energy power station based on the station capacity and the station number, so as to configure the distributed compensators according to a target voltage support degree.

In some optional implementations, the second determining module 502 includes:

a first determining unit, configured to determine an initial capacity and an initial number of distributed compensators arranged in each of the multiple input branches;

an update unit, configured to use the initial capacity and the initial number as a current capacity and a current number, calculate a value of a current voltage stiffness corresponding to the current capacity and the current number, iteratively update the current capacity and the current number based on the value of the current voltage stiffness and the value of the target voltage stiffness until the value of the current voltage stiffness of each of the multiple input branches meets a corresponding value of the target voltage stiffness, and obtain a target capacity and a target number of each of the multiple input branches, wherein a difference between the value of the target voltage stiffness and a value of updated voltage stiffness corresponding to the target capacity and the target number is less than a predetermined difference threshold.

In some optional embodiments, the update unit includes:

a first calculation subunit, configured to calculate a total capacity of all the multiple input branches of the new energy power station and calculate the value of the current voltage stiffness that correspond to the current capacity and the current number.
a second calculation subunit, configured to obtain a capacity adjustment value based on the value of the target voltage stiffness, the total capacity, the current capacity, the current number, and the value of the current voltage stiffness.

In some optional embodiments, the multiple input branches include an input branch to be measured and remaining input branches. The update unit further includes:

a third calculation subunit, configured to calculate self-impedance vectors of the remaining input branches, a grid-connected equipment impedance vector of the input branch to be measured, grid-connected equipment impedance vectors of the remaining input branches and a power grid impedance vector that correspond to the current capacity and the current number by using the Thevenin equivalent circuit conversion formula;
a fourth calculation subunit, configured to calculate the value of the current voltage stiffness based on the self-impedance vectors of the remaining input branches, the grid-connected equipment impedance vector of the input branch to be measured, the grid-connected equipment impedance vectors of the remaining input branches and the power grid impedance vector.

In some optional implementations, the update unit includes:

a simulation subunit, configured to obtain a transient voltage and a no-load voltage of the AC bus with multiple DC feed lines that correspond to the current capacity and the current number based on an electromagnetic transient simulation model of the new energy power station;
a fifth calculation subunit, configured to obtain the value of the current voltage stiffness based on the ratio of the transient voltage of the AC bus with multiple DC feed lines to the no-load voltage of the AC bus with multiple DC feed lines.

In some optional embodiments, the device is further configured to, if the value of the current voltage stiffness is lower than that of the target voltage stiffness, increase the current capacity and/or the current number; and if the value of the current voltage stiffness is higher than that of the target voltage stiffness, decrease the current capacity and/or the current number.

In some optional embodiments, the first determining module 501 includes:

a second determining unit, configured to determine the value of the target voltage stiffness based on actual voltage support requirement of each of the multiple input branches; and/or,
a third determining unit, configured to determine the value of the target voltage stiffness based on a voltage tolerance of each of the multiple input branches.

The further functional descriptions of the above modules and units are the same as those in the corresponding method embodiments described above and are not repeated here.

The apparatus for configuring distributed compensators based on voltage stiffness indexes of the present embodiment is presented in the form of functional units, where each unit herein refers to an ASIC (Application Specific Integrated Circuit) circuit, a processor and a memory that execute one or more software or firmware, and/or other devices capable of providing the above-mentioned functions.

The present application also provides a computer device comprising the apparatus for configuring distributed compensators based on voltage stiffness indexes shown in FIG. 6.

Referring to FIG. 7, which is a hardware structural schematic diagram of the computer device according to an embodiment of the present application. As shown in FIG. 7, the computer device includes: one or more processors 10, a memory 20, and interfaces for connecting various components, including high-speed interfaces and low-speed interfaces. The various components communicate with each other via different buses and can be equipped on a common motherboard or in other ways as needed. The processor processes instructions that are executed within the computer device, including instructions stored in or on the memory for displaying GUI information on external input/output devices (e.g., display devices coupled to the interfaces). In some optional embodiments, multiple processors and/or multiple buses may be used together with multiple memories as needed. Similarly, multiple computer devices can be interconnected, wherein each device provides part of the necessary operations (e.g., as a server array, a group of blade servers, or a multiprocessor system). FIG. 7 illustrates an example wherein a single processor 10 is used.

The processor 10 can be a central processing unit, a network processor, or a combination thereof. Wherein, the processor 10 may further include hardware chips. The above-mentioned hardware chips can be specific integrated circuits, programmable logic devices, or a combination thereof. The above-mentioned programmable logic devices may be complex programmable logic devices, field-programmable gate arrays, general-purpose logic array, or any combination thereof.

The memory 20 has instructions stored therein that are executable by at least one processor 10, so as to enable the at least one processor 10 to perform the method shown in the above-mentioned embodiments.

The memory 20 may include a program storage area and a data storage area, wherein the program storage area may have an operating system and application programs required for at least one function stored therein; the data storage area may have data stored therein wherein, the data is created based on the use of the computer device, etc. Furthermore, the memory 20 may include high-speed random access memory and may also include non-volatile memory, such as at least one disk storage device, flash memory device, or other non-volatile solid-state storage device. In some optional embodiments, the memory 20 may optionally include memories remotely located relative to the processor 10, with such remote memory being connected to the computer device via a network. Examples of the above-mentioned networks include, but are not limited to, the Internet, an enterprise intranet, a local area network, a mobile communication network, and combinations thereof.

The memory 20 may include volatile memory, such as random access memory; the memory may also include non-volatile memory, such as flash memory, hard disk, or solid-state disk; the memory 20 may further include a combination of the above-mentioned types of memory.

The computer device further includes an input device 30 and an output device 40. The processor 10, the memory 20, the input device 30, and the output device 40 may be interconnected via a bus or other means, with an example in FIG. 7 illustrating interconnection via a bus.

The input device 30 may receive input digital or character information and generate key signal input related to user settings and functional control of the computer device, such as a touchscreen, numeric keypad, mouse, trackpad, touchpad, indication lever, one or more mouse buttons, trackball, or joystick. The output device 40 may include display devices, auxiliary lighting devices (e.g., LEDs), haptic feedback devices (e.g., vibration motors), and the like. The above-mentioned display devices include, but are not limited to, liquid crystal displays, light-emitting diodes, monitors, and plasma displays. In some optional embodiments, the display device may be a touchscreen.

The present application also provides a computer-readable storage medium. The method described herein may be implemented in hardware or firmware, or as computer codes that can be recorded on a storage medium, or can be downloaded over a network and originally stored on a remote storage medium or non-transitory machine-readable storage medium and subsequently stored into a local storage medium. Thus, the method described herein may be performed by a software stored on a storage medium using a general-purpose computer, a dedicated processor, or programmable or dedicated hardware. The storage medium may be a magnetic disk, optical disk, read-only memory, random access memory, flash memory, hard disk, or solid-state disk, etc.; optionally, the storage medium may also include a combination of the above-mentioned types of memory. It should be understood that a computer, processor, microprocessor controller, or programmable hardware includes storage components capable of storing or receiving software or computer codes. When the software or computer codes are accessed and executed by the computer, processor, or hardware, the method described in the above embodiments is implemented.

A portion of the present application may be applied as a computer program product, such as computer program instructions, which, when executed by a computer, enable the computer to invoke or provide the methods and/or technical solutions according to the present application through its operations. Those skilled in the art will understand that the form of computer program instructions existing on a computer-readable medium includes, but is not limited to, source files, executable files, installation package files, etc. Accordingly, the manner in which computer program instructions are executed by a computer includes, but is not limited to: the computer directly executing the instructions, or the computer compiling the instructions and then executing the corresponding compiled program, or the computer reading and executing the instructions, or the computer reading and installing the instructions and then executing the corresponding installed program. Here, a computer-readable medium may be any available computer-readable storage medium or communication medium accessible by a computer.

Although the embodiments of the present application are described in combination with the drawings, those skilled in the art may make various modifications and variations without departing from the spirit and scope of the present application, and such modifications and variations fall within the scope defined by the appended claims.

**Claims**

1. A method for configuring distributed compensators based on voltage stiffness indexes, **characterized in that** the method for configuring distributed compensators based on voltage stiffness indexes is applied to a new energy power station comprising multiple input branches, and the method comprises:

   determining a value of a target voltage stiffness for each of the multiple input branches, wherein the voltage stiffness is used to represent a voltage support degree;
   determining a target capacity and a target number of distributed compensators arranged in each of the multiple input branches based on the value of target voltage stiffness, and
   acquiring a station capacity and a station number according to the sum of target capacities and target numbers of the multiple input branches; and
   configuring the distributed compensators for the new energy power station based on the station capacity and the station number, so as to configure the distributed compensators according to a target voltage support degree;
   wherein the step of determining the target capacity and the target number of distributed compensators arranged in each of the multiple input branches based on the value of target voltage stiffness comprises:

   determining an initial capacity and an initial number of distributed compensators arranged in each of the multiple input branches; and
   using the initial capacity and the initial number as a current capacity and a current number, calculating a value of a current voltage stiffness corresponding to the current capacity and the current number, iteratively updating the current capacity and the current number based on the value of the current voltage stiffness and the value of the target voltage stiffness until the value of the current voltage stiffness of each of the multiple input branches meets a corresponding value of the target voltage stiffness, and obtaining a target capacity and a target number of each of the multiple input branches, wherein a difference between the value of the target voltage stiffness and a value of updated voltage stiffness corresponding to the target capacity and the target number is less than a predetermined difference threshold.

2. The method according to claim 1, **characterized in that** the step of iteratively updating the current capacity and the current number based on the value of the current voltage stiffness and the value of the target voltage stiffness comprises:

   calculating a total capacity of all the multiple input branches of the new energy power station;
   obtaining a capacity adjustment value based on the value of the target voltage stiffness, the total capacity, the current capacity, the current number, and the value of the current voltage stiffness; and
   updating the current capacity and the current number based on the capacity adjustment value.

3. The method according to claim 1, **characterized in that** the multiple input branches include an input branch to be measured and remaining input branches, and the step of calculating the value of the current voltage stiffness corresponding to the current capacity and the current number comprises:

   calculating self-impedance vectors of the remaining input branches, a grid-connected equipment impedance vector of the input branch to be measured, grid-connected equipment impedance vectors of the remaining input branches and a power grid impedance vector that correspond to the current capacity and the current number by using the Thevenin equivalent circuit conversion formula; and
   calculating the value of the current voltage stiffness based on the self-impedance vectors of the remaining input branches, the grid-connected equipment impedance vector of the input branch to be measured, the grid-connected equipment impedance vectors of the remaining input branches and the power grid impedance vector.

4. The method according to claim 1, **characterized in that** the step of calculating the value of the current voltage stiffness corresponding to the current capacity and the current number comprises:

   obtaining a transient voltage and a no-load voltage of the AC bus with multiple DC feed lines that correspond to the current capacity and the current number based on an electromagnetic transient simulation model of the new energy power station; and

obtaining the value of the current voltage stiffness based on a ratio of the transient voltage of the AC bus with multiple DC feed lines to the no-load voltage of the AC bus with multiple DC feed lines.

5. The method according to claim 1, **characterized in that** the method further comprises:

if the value of the current voltage stiffness is lower than that of the target voltage stiffness, increasing the current capacity and/or the current number; and

if the value of the current voltage stiffness is higher than that of the target voltage stiffness, decreasing the current capacity and/or the current number.

6. The method according to claim 1, **characterized in that** the step of determining the value of the target voltage stiffness for each of the multiple input branches comprises:

determining the value of the target voltage stiffness based on actual voltage support requirement of each of the multiple input branches; and/or,

determining the value of the target voltage stiffness based on a voltage tolerance of each of the multiple input branches.

7. A apparatus for configuring distributed compensators based on voltage stiffness indexes, **characterized in that** the apparatus for configuring distributed compensators based on voltage stiffness indexes comprises:

a first determining module, configured to determine a value of a target voltage stiffness for each of multiple input branches, wherein the voltage stiffness is used to represent a voltage support degree;

a second determining module, configured to determine a target capacity and a target number of distributed compensators arranged in each of the multiple input branches based on the value of target voltage stiffness, and acquire a station capacity and a station number according to the sum of target capacities and target numbers of the multiple input branches; wherein the step of determining the target capacity and the target number of distributed compensators arranged in each of the multiple input branches based on the value of target voltage stiffness comprises:

determining an initial capacity and an initial number of distributed compensators arranged in each of the multiple input branches; and

using the initial capacity and the initial number as a current capacity and a current number, calculating a value of a current voltage stiffness corresponding to the current capacity and the current number, iteratively updating the current capacity and the current number based on the value of the current voltage stiffness and the value of the target voltage stiffness until the value of the current voltage stiffness of each of the multiple input branches meets a corresponding value of the target voltage stiffness, and obtaining a target capacity and a target number of each of the multiple input branches, wherein a difference between the value of the target voltage stiffness and a value of updated voltage stiffness corresponding to the target capacity and the target number is less than a predetermined difference threshold; and

a configuration module, configured to configure the distributed compensators for the new energy power station based on the station capacity and the station number, so as to configure the distributed compensators according to a target voltage support degree.

8. A computer device, **characterized by** comprising:
a memory and a processor, wherein the memory and the processor are interconnected in a communication manner, the memory has computer instructions stored therein, and the processor is configured to execute the computer instructions to perform the method for configuring distributed compensators based on voltage stiffness indexes according to any one of claims 1 to 6.

9. A computer-readable storage medium, **characterized in that** the computer-readable storage medium has computer instructions stored therein, wherein the computer instructions are configured to enable a computer to perform the method for configuring distributed compensators based on voltage stiffness indexes according to any one of claims 1 to 6.

10. A computer program product, **characterized by** comprising computer instructions, wherein the computer instructions are configured to enable a computer to perform the method for configuring distributed compensators based on voltage stiffness indexes according to any one of claims 1 to 6.

FIG. 1

| | S101 |
| --- | --- |
| Determining a value of a target voltage stiffness for each of the multiple input branches, wherein the voltage stiffness is used to represent a voltage support degree | |

| | S102 |
| --- | --- |
| Determining a target capacity and a target number of distributed compensators arranged in each of the multiple input branches based on the value of target voltage stiffness, and acquiring a station capacity and a station number according to the sum of target capacities and target numbers of the multiple input branches | |

| | S103 |
| --- | --- |
| Configuring the distributed compensators for the new energy power station based on the station capacity and the station number, so as to configure the distributed compensators according to a target voltage support degree | |

FIG. 2

FIG. 3

(A)                                    (B)

FIG. 4

Start

The number and the capacity of grid-connected devices of the new energy power converters contained in the new energy power station with medium-voltage or low-voltage (e.g., 110kV, 220kV, or 330kV) are determined

According to basic principles and experience of reactive compensation configuration for the new energy power station, the initial number and initial capacity of distributed compensators are configured at each AC bus with multiple DC feed lines

By using the Thevenin equivalent circuit conversion formula, the equivalent impedance of each device connected to new energy power grid and the equivalent electromotive force and equivalent impedance of each of the multiple input branches are derived respectively. The value of the voltage stiffness of each AC bus with multiple DC feed lines at each new energy power station is calculated

Or

The no-load voltage values and overvoltage values under transient conditions of each AC bus of each new energy power station are simulated by the simulation model and the value of the voltage stiffness of each AC bus at each new energy power station is calculated

The calculated value and the simulated value of the voltage stiffness of each AC bus with multiple DC feed lines at each new energy power station are sequentailly compared with the target value

Yes

If the condition is satisfied

No

The required capacity increase or decrease amount of the distributed compensators for the $ith$ AC bus with multiple DC feed lines for the $(h+1)th$ iteration of adjustment is calculated

The capacity of the distributed compensators at the $ith$ AC bus with multiple DC feed lines after the $h+1th$ iteration of adjustment is calculated

The adjusted total capacity of the distributed compensators at all AC buses with multiple DC feed lines of all new energy power stations is calculated

The configuration result of the distributed compensators at this time is determined as the optimal configuration capacity of the distributed compensators in each new energy power station

End

FIG. 5

First determining module 501

Second determining module 502

Configuration module 503

FIG. 6

Processor 10

Input device 30

Output device 40

Memory 20

FIG. 7

**TRANSLATION**

## INTERNATIONAL SEARCH REPORT

International application No.

**PCT/CN2025/113408**

| A. | CLASSIFICATION OF SUBJECT MATTER |
|---|---|

H02J3/44(2006.01)i

According to International Patent Classification (IPC) or to both national classification and IPC

| B. | FIELDS SEARCHED |
|---|---|

Minimum documentation searched (classification system followed by classification symbols)

IPC:H02J

Documentation searched other than minimum documentation to the extent that such documents are included in the fields searched

Electronic data base consulted during the international search (name of data base and, where practicable, search terms used)

CNABS; CNTXT; VEN; USTXT; WOTXT; EPTXT; CNKI; IEEE: 电压, 支撑, 刚度, 分布, 调节, 相位, 目标, 容量, 迭代, voltage, support, stiffness, distribute, modulate, phase, target, capacity, iterate

| C. | DOCUMENTS CONSIDERED TO BE RELEVANT |
|---|---|

| Category* | Citation of document, with indication, where appropriate, of the relevant passages | Relevant to claim No. |
|---|---|---|
| PX | CN 119726934 A (SHANGHAI INVESTIGATION DESIGN & RESEARCH INSTITUTE CO., LTD.) 28 March 2025 (2025-03-28) description, paragraphs 4-134, and figure 1-7 | 1-10 |
| A | CN 118970999 A (NORTH CHINA ELECTRIC POWER UNIVERSITY) 15 November 2024 (2024-11-15) description, paragraphs 42-88, and figures 1-2 | 1-10 |
| A | CN 114844130 A (CHINA ELECTRIC POWER RESEARCH INSTITUTE CO., LTD. et al.) 02 August 2022 (2022-08-02) description, paragraphs 93-199, and figures 1-8 | 1-10 |
| A | CN 117638966 A (POWER DISPATCHING CONTROL BRANCH OF INNER MONGOLIA POWER (GROUP) CO., LTD. et al.) 01 March 2024 (2024-03-01) entire document | 1-10 |
| A | JP 2006340489 A (KANSAI ELECTRIC POWER CO., INC.) 14 December 2006 (2006-12-14) entire document | 1-10 |

☐ Further documents are listed in the continuation of Box C. ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
|---|---|
| **04 November 2025** | **11 November 2025** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

### INTERNATIONAL SEARCH REPORT
**Information on patent family members**

International application No.

**PCT/CN2025/113408**

| Patent document cited in search report | | | Publication date (day/month/year) | Patent family member(s) | | | Publication date (day/month/year) |
|---|---|---|---|---|---|---|---|
| CN | 119726934 | A | 28 March 2025 | CN | 119726934 | B | 15 July 2025 |
| CN | 118970999 | A | 15 November 2024 | None | | | |
| CN | 114844130 | A | 02 August 2022 | CN | 114844130 | B | 04 July 2025 |
| CN | 117638966 | A | 01 March 2024 | None | | | |
| JP | 2006340489 | A | 14 December 2006 | JP | 4431522 | B2 | 17 March 2010 |

Form PCT/ISA/210 (patent family annex) (July 2022)

**EP 4 776 460 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202411726513